# EUROPEAN PATENT SPECIFICATION

(11) **EP 3 305 088 B1**
(45) Date of publication and mention of the grant of the patent: **16.10.2019**
(21) Application number: 16835535.2
(22) Date of filing: 25.07.2016
(51) Int. Cl.: A23G 1/30, A23G 1/32, A23G 1/46, A23G 1/40

(54) **METHOD OF PRODUCING CHOCOLATE WITH A LOW CALORIFIC VALUE**
VERFAHREN ZUR HERSTELLUNG VON KALORIENARMER SCHOKOLADE
PROCÉDÉ DE PRODUCTION DE CHOCOLAT AYANT UNE VALEUR ÉNERGÉTIQUE RÉDUITE

(30) Priority: 13.08.2015 RU 2015133959
(43) Date of publication of application: 11.04.2018
(73) Proprietor: Limited Liability Company Lighthouse Ocean, St.Petersburg 197022 (RU)
(72) Inventor: GORBUNOV, Artem Olegovich, Ozersk Chelyabinskaya obl. 456785 (RU); GUS'KOVA, Elena Viktorovna, St.Petersburg 198328 (RU); SMOLKO, Natal'ya Sergeevna, Novokuznetsk Kemerovskaya obl. 654032 (RU)
(74) Representative: Glawe, Delfs, Moll
(86) International application number: PCT/RU2016/050022
(87) International publication number: WO 2017/026925

(56) References cited:
- EP-A2- 0 393 327
- EP-A2- 0 940 085
- WO-A1-2009/001063
- US-A- 177 801
- US-A- 5 425 957
- US-A- 5 962 063
- US-A- 6 165 540

## Description

### FIELD OF THE INVENTION

The invention relates to the food industry, in particular to a method for producing a chocolate mass suitable for producing dark and milk chocolate having a reduced energy value with the use of a water-in-oil emulsion.

### PRIOR ART

Traditionally, chocolate products based on cocoa butter and sugar have an energy value ranging from 530 to 580 kcal per 100 g of a product. Such products are not suitable for persons suffering from diabetes mellitus and those on clinical nutrition with a limited amount of calories consumed.

A variety of efforts for replacing sugar with less energetic sweeteners and a portion of cocoa butter with a water-in-oil emulsion have been made in order to reduce the energy value of chocolate products.

A process for producing a low energy value chocolate product is known in the art, which product comprises a chocolate shell and a filling (see US5425957, 20.06.1995). According to a process for producing thereof, a chocolate composition is prepared for the shell, which comprises a cocoa butter, a cocoa liquor, a milk powder, a maltitol, a hazelnut paste, vanillin, lecithin, aspartame, milk protein and polydextrose. Then the chocolate composition for the filling is prepared that comprises the cocoa butter, the cocoa liquor, a butter fat, the milk powder, the maltitol, the hazelnut paste, vanillin and lecithin. After that, a water-in-oil emulsion is prepared that comprises the cocoa butter, an emulsifier, sorbitol and water. The produced emulsion is mixed with the chocolate composition for the filling. A chocolate mass for the shell is tempered, and the product is formed as the chocolate shell and the filling encapsulated therein.

A process for manufacturing chocolate compositions for producing chocolate is known in the art (see US6165540, 26.12.2000), which comprises preparation of a water-in-oil emulsion containing water in a quantity of 10-80 wt.%, an emulsifier in a quantity of 0.5-3 wt.%, and cocoa butter, and mixing of the produced emulsion with melted dark or milk chocolate. The energy value of milk chocolate produced on the basis of maltitol, as calculated according to the formulation described in this patent, is 384 kcal per 100 g. A disadvantage of this process is that chocolate thus produced has a very short period of melting, i.e. does not have a satisfactory texture characteristic of chocolate with a standard energy value. Moreover, this chocolate based on maltitol does not have a sufficient sweetness.

The closest method to the claimed invention is a method of making a low fat chocolate (see US20120177801, 12.07.2012), which comprises preparation of a water-in-oil emulsion, preparation of a chocolate composition, and mixing a melted chocolate composition with said emulsion. Said emulsion is prepared by high-shear mixing of a cocoa butter, an aqueous phase comprising water and a water-soluble substance, and an emulsifier. The chocolate composition may comprise milk powder, sweeteners, cocoa liquor, fruits, nuts, biscuit particles, candy particles and colorings. But this analog does not disclose particular formulations of the chocolate composition.

WO2009001063 discloses the use of sugar alcohols, such as erythritol. in low-calories chocolates.

One common disadvantage of the known analogs is that low-energy chocolate produced using known technologies has organoleptic and physical properties that are far from those of chocolate having standard energy value and based on sugar and cocoa butter.

### SUMMARY OF THE INVENTION

The objective of this invention is to eliminate disadvantages of the analogs and develop a method for producing a chocolate mass for the purpose of producing chocolate with a reduced energy value (330 kcal per 100 g or less) that has physical and organoleptic properties closest to those of chocolate of a standard energy value.

The technical effect of the claimed invention is an improvement in organoleptic indicators, such as intensity of chocolate flavor, absence of off-flavors and aftertaste, natural sweetness and chocolate texture, with a reduction of energy value thereof. Moreover, physical properties, such as yield stress, contraction degree upon crystallization and hardness of a final product, are improved.

This technical effect is achieved by the claimed invention due to the fact that a method for producing the chocolate mass for producing chocolate with a reduced energy value comprises: preparation of a water-in-oil emulsion, preparation of a chocolate composition, and mixing of a melted chocolate composition with said emulsion, wherein for producing said chocolate composition
- a water solution of erythritol being prepared,
- said solution being mixed with a cocoa liquor,
- an obtained mixture being thickened and crystallized for producing a crumb comprising, in wt.%:
   erythritol 74-84,
   the cocoa liquor 15-25,
   water - not more than 1.5,
- the obtained crumb is mixed with dietary fibers, cocoa products in the form of cocoa liquor or cocoa butter and, optionally, dried milk products in the following ingredient ratio, wt.%:
   the crumb 30-60,
   the dietary fibers 5-30,
   the cocoa liquor 30-40 and/or the cocoa butter 12-15,
   the dried milk products 0-25,
   a melted chocolate composition being mixed with said emulsion in the following ingredient ratio, wt.%:
   the chocolate composition 80-95,
   the emulsion 5-20.

Furthermore, the stated technical effect is achieved in particular implementations of the first embodiment of the invention due to that:
- for producing the water-in-oil emulsion:
   an aqueous phase is prepared by mixing water and a water-soluble substance in the following ingredient ratio, wt.%:
      water 50-90,
      the water-soluble substance 10-50,
   an emulsifier is dissolved in the cocoa butter, and said aqueous phase is introduced into the obtained mixture in the following ingredient ratio, wt.%:
      the cocoa butter 20-80,
      the aqueous phase 18-78,
      the emulsifier 1-3,
   the mixture is subjected to high-shear stirring for producing an emulsion having aqueous phase drop sizes ranging from 0.1 to 1000 microns;
      - at least one ingredient selected from the group comprising polyols, carbohydrates and soluble dietary fibers is used as the water-soluble substance;
      - glycerol or sorbitol are used as polyols, sucrose or dextrose are used as carbohydrates, and pectin or cellulose are used as the soluble dietary fibers;
      - at least one ingredient selected from the group comprising lecithin, polyglycerol ester, mono- or diglyceride, sucrose ester, sorbitan ester is used as the emulsifier;
      - in the step of preparing the chocolate composition, an erythritol aqueous solution is prepared that comprises 20-30 wt.% of water;
      - in the step of preparing the chocolate composition, prior to mixing with the cocoa liquor, said erythritol aqueous solution is heated to a temperature ranging from 100 to 120°C;
      - in the step of preparing the chocolate composition, said mixture is thickened in a heat exchanger;
      - prior to mixing with said emulsion, the chocolate composition is refined to a particle size ranging from 15 to 25 microns;
      - said chocolate composition and said emulsion are mixed at a chocolate composition temperature ranging from 40 to 50°C;
      - at least one ingredient selected from the group comprising oligofructose, polydextrose, pectin, maltodextrin, inulin, agar, alginate, carrageenan, cellulose, guar gum, xanthan gum and locust bean gum is used the dietary fibers for chocolate composition;
      - a dark chocolate mass is produced that comprises a solid residue of cocoa products in an amount of 40-44 wt.%, a solid residue of total fat in an amount of 22-27 wt.%, and moisture in an amount of 1-11 wt.%;
      - a milk chocolate mass is produced that comprises a solid residue of total fat in an amount of 21-25 wt.%, a solid residue of butterfat in an amount of 2-2,5 wt.% and moisture in an amount of 0,5-11 wt.%;
      - a chocolate mass is produced that has an energy value not more than 330 kcal/100 g.

The claimed invention is directed to producing the chocolate mass for dark or milk chocolate with a reduced energy value, wherein sugar is replaced with a composition of erythritol and dietary fibers, and cocoa butter is replaced with an emulsion of the water-in-oil type.

The term "chocolate with a reduced energy value" is understood herein as a product having an energy value by at least 30% lower than that of chocolate with standard energy value (530-580 kcal/100 g) based on sugar and a cocoa butter (see Appendix 5 to the Technical Regulations of the Customs Union "Foodstuffs with regard to their Marking" (CU TR 022/2011)").

Preferably, an energy value of this chocolate is not more than 330 kcal/100 g.

Chocolate produced according to the claimed method exhibits improved physical and organoleptic characteristics that are close to properties of chocolate of standard energy value to the maximum. As a result, a consumer can have taste and emotional sensations similar to those arising when consuming chocolate with a standard energy value, but can receive far less quantity of calories.

These properties are ensured due to combining the steps of the claimed method with a composition of the chocolate mass produced.

According to the claimed method, a cocoa liquor is produced that contains 5-20% of an water-in-oil emulsion based on a cocoa butter, which ensures reduction in energy value of a product produced, while preserving main organoleptic characteristics thereof.

A reduction in an amount of the emulsion to a level below 5 wt.% when using the claimed method will lead to an increase in energy value of the product and deterioration of organoleptic properties thereof, which will result in poor melting of chocolate in the mouth.

An increase in the amount of the emulsion to a level above 20 wt.% when using the claimed method will lead to poorer physical properties of chocolate produced, namely, losses in contraction and typical glance.

Production of a chocolate composition comprising cocoa products, erythritol and dietary fibers ensures the most optimal combination of natural taste and low energy value of a product.

It is found that erythritol is the only sweetener suitable for production of chocolate with a reduced energy value and optimal physical and organoleptic characteristics, since it possesses the following properties:
sweetness level of 0.7 (compare with 1.0 for sucrose),
sweetness intensification when in combination with dietary fibers (inulin, oligofructose, etc.),
energy value equal to zero.

According to the claimed invention, erythritol is introduced into the composition in the form of a crumb produced from a mixture of an erythritol solution (syrup) and the cocoa liquor by thickening and crystallization. These operations enable to intensify taste-and-flavor properties of the product, in particular intensify chocolate flavor and reduce the cooling effect of erythritol.

The introduction of dietary fibers in an amount of 5-30 wt.% into the chocolate composition results in a significant reduction in energy value of the product as well as reduces the cooling action of erythritol, i.e. masks off-flavors and aftertaste. A ratio of erythritol (crumb) and the dietary fibers, each of them having a lower sweetness level as compared to sugar, is such that they intensify each other being taken in combination and in said amounts, thus ensuring reaching a sweetness level that does not differ from that of conventional chocolate.

### BEST MODE OF CARRYING OUT THE INVENTION

The claimed method can be implemented as follows.

The first step is production of an aqueous phase for an emulsion. For this purpose, water is mixed with a water-soluble substance (s), preferably in the following ratio, wt.%:
water - 50-90,
the water-soluble substance - 10-50.

Then, in the second step, a mixture is prepared from the produced aqueous phase, a cocoa butter and an emulsifier. For this purpose, the emulsifier is dissolved in the cocoa butter at a temperature of 60°C for 15 minutes under moderate stirring with the use of any suitable equipment. The aqueous phase is added to the prepared mixture at a temperature ranging from 50 to 60°C under moderate stirring with the use of a magnetic or mechanical mixer. The addition is performed batchwise, as a continuous stream or by drops. The produced mixture is stirred for 1 minute. As a result, a triple mixture is produced that comprises, wt.%:
the cocoa butter - 20-80,
the aqueous phase - 18-78,
the emulsifier - 1-3.

The third step comprises preparation of a water-in-oil emulsion with an aqueous phase drop size ranging from 0.1 to 1,000 microns from the triple mixture, as produced in the second step, with the use of any apparatus suitable for this purpose, e.g. a high-shear bottom mixer operating at high rotation speeds. The emulsification process is continued until aqueous phase drops of a required size are achieved (approx. 10 minutes). The emulsion thus produced should be stable for a time period required for its further processing.

The fourth step may be conducted in parallel with the first and the second ones and consists in preparing a crumb based on a sweetener (erythritol) and a cocoa liquor. For this purpose, an aqueous solution (syrup) of erythritol is prepared by heating thereof, the water content being preferably in the range of 20 to 30 wt.%. The solution is heated to 100-120°C and mixed with the cocoa liquor. The prepared mass is passed through a heat exchanger for thickening, after which dry matter content of the mixture is increased to approx. 99 wt.%. At the same time, taste-and-flavor properties are formed. The concentrated mass produced by thickening is loaded into a crystallizer wherein an amorphous mass is quickly transformed into the crumb comprising erythritol small crystals with a size from 0.5 to 2 mm. The mass is held in the heat exchanger for 2-10 minutes. The crumb thus produced comprises, wt.% %:
erythritol - 74-84,
the cocoa liquor - 15-25,
water - not more than 1.5.

The crumb based on erythritol and the cocoa liquor is used for producing a chocolate composition at the stage of mixing the ingredients. The use of said crumb in the final chocolate mass enables to further reduce cooling effect of erythritol during dissolving.

The chocolate composition is prepared in the fifth step. In order to produce dark chocolate, the crumb, the cocoa liquor and dietary fibers are mixed in the following ratio, wt.%:
the crumb - 30-60,
the dietary fibers - 5-30,
the cocoa liquor - 30-40.

In order to produce milk chocolate, the crumb, the cocoa butter, the dietary fibers and a milk powder are mixed in the following ratio, wt.%:
the crumb - 30-60,
the cocoa butter - 12-15,
the dietary fibers - 5-30,
the milk powder - up to 25.

Mixing is performed, e.g. in a screw-type mixer. Then, the produced mixture is refined to a particle size ranging from 15 to 25 microns with the use of a refiner for a required time period.

The sixth step consists in mixing the water-in-oil emulsion, as produced in the third step, with the chocolate composition heated to 40-50°C, under stirring. The mixing process is performed, e.g. in a collecting tank equipped with a screw-type mixer. A duration of the mixing process is determined by mass homogeneity and may last from 1 minute to 1 hour (30 minutes on the average).

The last step comprises tempering of the produced mass for forming cocoa butter crystals of the required crystalline modification, subsequent molding and forming of chocolate.

### Exemplary embodiments of the invention

Chocolate masses were prepared according to the claimed invention for producing dark (Examples 1-3) and milk (Examples 4-6) chocolate, which compositions and properties are shown in Tables 1-12 below.

**Table 1. Chocolate mass composition**

| **Ingredient** | **Functional property** | **Content, wt.%** |
|---|---|---|
| **1. Aqueous phase for emulsion** | | |
| Water | - | 70.0 |
| Glycerol | Water-soluble substance | 15.0 |
| Sorbitol | Water-soluble substance | 15.0 |

| **2. Aqueous emulsion based on cocoa butter** | | |
|---|---|---|
| Cocoa butter | Fat phase | 20.0 |
| Aqueous phase (1) | - | 78.0 |
| Soy lecithin | Emulsifier | 2.0 |

| **3. Crumb based on erythritol and cocoa liquor** | | |
|---|---|---|
| Erythritol | Sweetener | 82.5 |
| Cocoa liquor | Cocoa product | 16.5 |
| Water | - | 1.0 |

| **4. Chocolate composition** | | |
|---|---|---|
| Cocoa liquor | Cocoa product | 35.0 |
| Crumb (from Table 3) | Sweetener | 60.0 |
| Oligofructose | Dietary fibers | 5.0 |

| **5. Chocolate mass** | | |
|---|---|---|
| Chocolate composition (4) | - | 80.0 |
| Aqueous emulsion based on cocoa butter (2) | - | 20.0 |

**Table 2. Chocolate properties**

| Parameter | Value |
|---|---|
| Dry residue of cocoa products, % | 40.0 |
| Dry residue of total fat, % | 23.4 |
| Moisture, % | 10.9 |
| Energy value, kcal/100 g | 280 |

### Example 2. Dark chocolate

**Table 3. Chocolate mass composition**

| **Ingredient** | **Functional property** | **Content, wt.%** |
|---|---|---|
| **1. Aqueous phase for emulsion** | | |
| Water | - | 50.0 |
| Sucrose | Water-soluble substance | 25.0 |
| Dextrose | Water-soluble substance | 25.0 |

| **2. Aqueous emulsion based on cocoa butter** | | |
|---|---|---|
| Cocoa butter | Fat phase | 80.0 |
| Aqueous phase (1) | - | 18.0 |
| PGPR | Emulsifier | 2.0 |

| **3. Crumb based on erythritol and cocoa liquor** | | |
|---|---|---|
| Erythritol | Sweetener | 74.5 |
| Cocoa liquor | Cocoa product | 24.5 |
| Water | - | 1.0 |

| **4. Chocolate composition** | | |
|---|---|---|
| Cocoa liquor | Cocoa product | 40.0 |
| Crumb (from Table 3) | Sweetener | 30.0 |
| Inulin | Dietary fibers | 10.0 |
| Oligo fructose | Dietary fibers | 20.0 |

| **5. Chocolate mass** | | |
|---|---|---|
| Chocolate composition (4) | - | 93.0 |
| Aqueous emulsion based on cocoa butter (2) | - | 7.0 |

**Table 4. Chocolate properties**

| **Parameter** | **Value** |
|---|---|
| Dry residue of cocoa products, % | 42.8 |
| Dry residue of total fat, % | 25.7 |
| Moisture, % | 1.0 |
| Energy value, kcal/100 g | 330 |

### Example 3. Dark chocolate

**Table 5. Chocolate mass composition**

| **Ingredient** | **Functional property** | **Content, wt.%** |
|---|---|---|
| **1. Aqueous phase for emulsion** | | |
| Water | - | 90.0 |
| Pectin | Water-soluble substance | 5.0 |
| Microcrystalline cellulose | Water-soluble substance | 5.0 |

| **2. Aqueous emulsion based on cocoa butter** | | |
|---|---|---|
| Cocoa butter | Fat phase | 50.0 |
| Aqueous phase (1) | - | 48.0 |
| Sorbitan stearate | Emulsifier | 2.0 |

| **3. Crumb based on erythritol and cocoa liquor** | | |
|---|---|---|
| Erythritol | Sweetener | 77.5 |
| Cocoa liquor | Cocoa product | 21.5 |
| Water | - | 1.0 |

| **4. Chocolate composition** | | |
|---|---|---|
| Cocoa liquor | Cocoa product | 30.0 |
| Crumb (from Table 3) | Sweetener | 60.0 |
| Oligo fructose | Dietary fibers | 8.0 |
| Pectin | Dietary fibers | 2.0 |

| **5. Chocolate mass** | | |
|---|---|---|
| Chocolate composition (4) | - | 88.0 |
| Aqueous emulsion based on cocoa butter (2) | - | 12.0 |

**Table 6. Chocolate properties**

| **Parameter** | **Value** |
|---|---|
| Dry residue of cocoa products, % | 43.8 |
| Dry residue of total fat, % | 26.4 |
| Moisture, % | 5.2 |
| Energy value, kcal/100 g | 302 |

### Example 4. Milk chocolate

**Table 7. Chocolate mass composition**

| **Ingredient** | **Functional property** | **Content, wt.%** |
|---|---|---|
| **1. Aqueous phase for emulsion** | | |
| Water | - | 70.0 |
| Glycerol | Water-soluble substance | 15.0 |
| Sorbitol | Water-soluble substance | 15.0 |

| **2. Aqueous emulsion based on cocoa butter** | | |
|---|---|---|
| Cocoa butter | Fat phase | 20.0 |
| Aqueous phase (1) | - | 78.0 |
| Soy lecithin | Emulsifier | 2.0 |

| **3. Crumb based on erythritol and cocoa liquor** | | |
|---|---|---|
| Erythritol | Sweetener | 83.5 |
| Cocoa liquor | Cocoa product | 16.5 |
| Water | - | 1.0 |

| **4. Chocolate composition** | | |
|---|---|---|
| Cocoa butter | Cocoa product | 14.0 |
| Dried whole milk | Milk product | 10.0 |
| Dried skimmed milk | Milk product | 8.0 |
| Crumb (3) | Sweetener | 59.0 |
| Oligo fructose | Dietary fibers | 5.0 |

| **5. Chocolate mass** | | |
|---|---|---|
| Chocolate composition (4) | - | 80.0 |
| Aqueous emulsion based on cocoa butter (2) | - | 20.0 |

**Table 8. Chocolate properties**

| **Parameter** | **Value** |
|---|---|
| Dry residue of cocoa products, % | 23.2 |
| Dry residue of total fat, % | 21.9 |
| Moisture, % | 10.9 |
| Energy value, kcal/100 g | 280 |

### Example 5. Milk chocolate

**Table 9. Chocolate mass composition**

| **Ingredient** | **Functional property** | **Content, wt.%** |
|---|---|---|
| **1. Aqueous phase for emulsion** | | |
| Water | - | 50.0 |
| Sucrose | Water-soluble substance | 25.0 |
| Dextrose | Water-soluble substance | 25.0 |

| **2. Aqueous emulsion based on cocoa butter** | | |
|---|---|---|
| Cocoa butter | Fat phase | 80.0 |
| Aqueous phase (1) | - | 18.0 |
| PGPR | Emulsifier | 2.0 |

| **3. Crumb based on erythritol and cocoa liquor** | | |
|---|---|---|
| Erythritol | Sweetener | 74.5 |
| Cocoa liquor | Cocoa product | 24.5 |
| Water | - | 1.0 |

| **4. Chocolate composition** | | |
|---|---|---|
| Cocoa butter | Cocoa product | 12.0 |
| Dried whole milk | Milk product | 10.0 |
| Dried skimmed milk | Milk product | 8.0 |
| Crumb (3) | Sweetener | 40.0 |
| Inulin | Dietary fibers | 10.0 |

| **5. Chocolate mass** | | |
|---|---|---|
| Chocolate composition (4) | - | 93.0 |
| Aqueous emulsion based on cocoa butter (2) | - | 7.0 |

**Table 10. Chocolate properties**

| **Parameter** | **Value** |
|---|---|
| Dry residue of cocoa products, % | 26.1 |
| Dry residue of total fat, % | 24.1 |
| Moisture, % | 0.6 |
| Energy value, kcal/100 g | 330 |

### Example 6. Milk chocolate

**Table 11. Chocolate mass composition**

| **Ingredient** | **Functional property** | **Content, wt.%** |
|---|---|---|
| **1. Aqueous phase for emulsion** | | |
| Water | - | 90.0 |
| Pectin | Water-soluble substance | 5.0 |
| Microcrystalline cellulose | Water-soluble substance | 5.0 |

| **2. Aqueous emulsion based on cocoa butter** | | |
|---|---|---|
| Cocoa butter | Fat phase | 50.0 |
| Aqueous phase (1) | - | 48.0 |
| Sorbitan stearate | Emulsifier | 2.0 |

| **3. Crumb based on erythritol and cocoa liquor** | | |
|---|---|---|
| Erythritol | Sweetener | 81.5 |
| Cocoa liquor | Cocoa product | 17.5 |
| Water | - | 1.0 |

| **4. Chocolate composition** | | |
|---|---|---|
| Cocoa butter | Cocoa product | 13.0 |
| Dried whole milk | Milk product | 11.0 |
| Dried skimmed milk | Milk product | 9.0 |
| Crumb (3) | Sweetener | 57.0 |
| Oligo fructose | Dietary fibers | 8.0 |

| **5. Chocolate mass** | | |
|---|---|---|
| Chocolate composition (4) | - | 88.0 |
| Aqueous emulsion based on cocoa butter (2) | - | 12.0 |

**Table 12. Chocolate properties**

| **Parameter** | **Value** |
|---|---|
| Dry residue of cocoa products, % | 26.2 |
| Dry residue of total fat, % | 24.6 |
| Moisture, % | 5.2 |
| Energy value, kcal/100 g | 302 |

### Test results

Comparative studies of the following specimens were conducted:
Specimen 1 - dark chocolate produced from the mass according to the claimed composition.
Specimen 2 - milk chocolate produced from the mass according to the claimed composition.
Specimen 3 - milk chocolate with maltitol produced from the chocolate mass according to US5425957 (analog).
Specimen 4 - dark chocolate with maltitol produced from the chocolate mass according to US6165540 (analog).
Specimen 5 - dark commercial chocolate of standard energy value comprising sugar, cocoa liquor, cocoa butter, lecithin, emulsifier E476, vanillin.
Specimen 6 - milk commercial chocolate of standard energy value comprising sugar, cocoa butter, dried whole milk, cocoa liquor, dried skimmed milk, lecithin, emulsifier E476, vanillin.

In order to determine organoleptic and consumer properties of the product, the chocolate specimens were tasted.

Active chocolate consumers (who buy chocolate at least once a week) were involved as tasters.

The tasters were invited to taste the chocolate specimens and answer the following questions:
1. Please, evaluate consumer properties under the scale from 1 to 5, where: 5 - like very much, 1 - dislike totally. The evaluation criteria are shown in Table 13.

**Table 13. Evaluation criteria for chocolate properties.**

| Parameter | Taste sensations at score 5 | ... | Taste sensations at score 1 |
|---|---|---|---|
| 1. External appearance | Glance surface | | Mat surface |
| 2. Chocolate taste intensity | Impressive, harmonious | | Tasteless |
| 3. Presence of off-flavors, aftertaste | Absent | | Present |
| 4. Sweetness degree | Natural | | Sickly sweet or insufficiently sweet |
| 5. Structure | Firm, with a "click" typical of chocolate | | Soft, "plasticine", loose |
| 6. Texture | Smooth, easily melts in the mouth | | Melts too quickly or is high-melting, large particles are present |

2. Please, compare a degree of your readiness to consume chocolate of Specimens 1 - 6 under the following scale: "Surely shall consume", "Sooner shall consume", "Do not know", "Sooner shall not consume", "Surely shall not consume".

The results of tasting are shown in Tables 14 and 15.

**Table 14. Average evaluations of chocolate specimen properties.**

| **Evaluation** | **Specimen 1** | **Specimen 2** | **Specimen 3** | **Specimen 4** | **Specimen 5** | **Specimen 6** |
|---|---|---|---|---|---|---|
| | **305 kcal/100 g** | **298 kcal/100 g** | **395 kcal/100 g** | **384 kcal/100 g** | **550 kcal/100 g** | **550 kcal/100 g** |
| External appearance | 4.8 | 4.7 | 3.5 | 2.9 | 4.9 | 4.8 |
| Chocolate taste intensity | 4.7 | 4.5 | 3.7 | 3.5 | 4.8 | 4.6 |
| Presence of off-flavors/aftertaste | 4.7 | 4.6 | 3.3 | 3.7 | 4.8 | 4.7 |
| Sweetness degree | 4.6 | 4.7 | 3.4 | 3.1 | 4.6 | 4.7 |
| Structure | 4.9 | 4.6 | 3.5 | 3.2 | 4.9 | 4.8 |
| Texture | 4.7 | 4.6 | 2.9 | 3 | 4.8 | 4.7 |

**Table 15. Opinions on readiness to consume chocolate.**

| **Opinion** | **Specimen 1** | **Specimen 2** | **Specimen 3** | **Specimen 4** | **Specimen 5** | **Specimen 6** |
|---|---|---|---|---|---|---|
| | **305 kcal/100 g** | **298 kcal/100 g** | **395 kcal/100 g** | **384 kcal/100 g** | **550 kcal/100 g** | **550 kcal/100 g** |
| Surely shall consume | 43% | 41% | 5% | 3% | 48% | 45% |
| Sooner shall consume | 35% | 32% | 14% | 10% | 29% | 32% |
| Do not know | 12% | 14% | 16% | 24% | 7% | 12% |
| Sooner shall not consume | 7% | 8% | 48% | 37% | 13% | 9% |
| Surely shall not consume | 3% | 5% | 17% | 26% | 3% | 2% |

Also, physical properties of chocolate were measured, such as: viscosity, yield stress, fineness degree, contraction degree and hardness.

Viscosity and yield stress of the chocolate masses were determined with the use of an Anton Paar RheolabQC viscometer and software RheoPlus at 40°C.

Fineness degree was determined with the use of a micrometer. Contraction degree was determined by measuring the dimensions of the mold and the dimensions of a chocolate brick in a day after cooling.

Hardness was determined with the use of a static mechanical analyzer (TA-HD plus).

**Table 16. Physical properties of chocolate specimens.**

| **Property** | **Specimen 1** | **Specimen 2** | **Specimen 3** | **Specimen 4** |
|---|---|---|---|---|
| | **305 kcal/100 g** | **298 kcal/100 g** | **395 kcal/100 g** | **384 kcal/100 g** |
| Casson plastic viscosity, Pa·s | 4.7 | 6.1 | 14.8 | 5.3 |
| Yield stress, Pa | 8.7 | 10.2 | 15.2 | 14.8 |
| Fineness degree, microns | 26 | 29 | 35 | 56 |
| Contraction degree after crystallization, % | 1.1 | 0.7 | 0.3 | 0.4 |
| Hardness, H | 90.5 | 74.3 | 50.8 | 43.6 |

Viscosity determines the chocolate degree of thickness. An optimal viscosity value of chocolate should be in the range from 2 to 4. As seen in Table 14, the viscosity of Specimens 1, 2 and 4 is close to an optimal value on the whole. Specimen 3 has too high viscosity. Solid particle fineness degree in chocolate determines organoleptic properties of a product: if an average fineness degree is higher than 30 microns, granularity of chocolate can be felt. All the specimens comply with this requirement, but Specimens 1 and 2 have a greater fineness degree.

Yield stress is an important process parameter for chocolate which determines its ability to flow. Specimens 1 and 2 have much better ability to flow than Specimens 3 and 4.

Contraction degree after crystallization should be greater than 0.5%, in order a cast chocolate bar may be extracted from a mold easily. Specimens 1 and 2 have a sufficient contraction degree, unlike Specimens 3 and 4.

Taking into account the above results of tasting and tests, a conclusion may be drawn that the chocolate mass produced according to the claimed invention exhibits significant advantages with regard to taste and physical characteristics as compared to the analogs.

Chocolate produced by methods according to US5425957 (Specimen 3) and US6165540 (Specimen 4) do not have a smooth surface and are characterized by too quick melting, i.e. have texture not peculiar to chocolate with a standard energy value (Specimens 5 and 6). Moreover, said chocolate is characterized by the presence of off-flavors.

Chocolate according to the claimed invention (Specimens 1 and 2) has optimal appearance, structure and texture and is characterized by natural taste peculiar to chocolate with a standard energy value (Specimens 5 and 6) and, at the same time, has a reduced total energy value (not more than 330 kcal/100 g). Moreover, this chocolate has physical properties, such as hardness, yield stress and contraction degree, that are closer to those of chocolate with a standard energy value.

Thus, the claimed chocolate composition ensures production of a low energy value chocolate having improved organoleptic and physical characteristics.

## Claims

1. A method for producing a chocolate mass for producing chocolate with a reduced energy value, comprising preparation of a water-in-oil emulsion, preparation of a chocolate composition and mixing of a melted chocolate composition with said emulsion, wherein, in order to prepare said chocolate composition,
- an aqueous solution of erythritol is prepared,
- said solution is mixed with a cocoa liquor,
- a produced mixture is thickened and crystallized for producing a crumb comprising, wt.%:
erythritol - 74-84,
the cocoa liquor - 15-25,
water - not more than 1.5;
- the produced crumb is mixed with dietary fibers, cocoa products in the form of the cocoa liquor or a cocoa butter and, optionally, a milk powder in the following ingredient ratio, wt.%:
the crumb - 30-60,
the dietary fibers - 5-30,
the cocoa liquor 30-40 and/or the cocoa butter - 12-15,
the milk powder - 0-25,
a melted chocolate composition being mixed with said emulsion in the following ingredient ratio, wt.%:
the chocolate composition - 80-95,
the emulsion - 5-20.

2. The method according to Claim 1, wherein, in order to produce the water-in-oil emulsion:
- an aqueous phase is prepared by mixing water and a water-soluble substance in the following ingredient ratio, wt.%:
water - 50-90,
the water-soluble substance - 10-50;
- an emulsifier is dissolved into the cocoa butter, and the prepared aqueous phase is introduced into the produced mixture in the following ingredient ratio, wt.%
the cocoa butter - 20-80,
the aqueous phase - 18-78,
the emulsifier - 1-3;
- said mixture is subjected to high-shear stirring for producing the emulsion with an aqueous phase drop size in the range from 0.1 to 1000 microns.

3. The method according to Claim 2, wherein
at least one ingredient selected from the group comprising polyols, carbohydrates and soluble dietary fibers is used as the water-soluble substance.

4. The method according to Claim 3, wherein glycerol or sorbitol is used as the polyols, sucrose or dextrose is used as the carbohydrates, and pectin or cellulose is used as the soluble dietary fibers.

5. The method according to Claim 2, wherein at least one ingredient selected from the group comprising lecithin, polyglycerol ester, mono- or diglyceride, sucrose ester, sorbitan ester is used as the emulsifier.

6. The method according to Claim 1, wherein in the step of preparing the chocolate composition the aqueous solution of erythritol comprises 20-30 wt.% of water.

7. The method according to Claim 1, wherein in the step of preparing the chocolate composition the aqueous solution of erythritol is heated to a temperature in the range from 100 to 120°C before mixing thereof with the cocoa liquor.

8. The method according to Claim 1, wherein the mixture is thickened in a heat exchanger in the step of preparing the chocolate composition.

9. The method according to Claim 1, wherein the chocolate composition is refined to a particle size ranging from 15 to 25 microns before mixing it with the emulsion.

10. The method according to Claim 1, wherein the chocolate composition and the emulsion are mixed at a temperature of the chocolate composition ranging from 40 to 50°C.

11. The method according to Claim 1, wherein at least one ingredient selected from the group comprising oligofructose, polydextrose, pectin, maltodextrin, inulin, agar, alginate, carrageenan, cellulose, guar gum, xanthan gum and locust bean gum is used as the dietary fibers for the chocolate composition.

12. The method according to any one of Claims 1-11, wherein the chocolate mass is produced that comprises a solid residue of cocoa products in an amount of 40-44 wt.%; a solid residue of total fat in an amount of 22-27 wt.%, and moisture in an amount of 1-11 wt.%.

13. The method according to any one of Claims 1-11, wherein the chocolate mass is produced that comprises a solid residue of total fat in an amount of 21-25 wt.%, a solid residue of butterfat in an amount of 2-2,5 wt.%, and moisture in an amount of 0,5-11 wt.%.

14. The method according to any one of Claims 1-11, wherein the chocolate mass is produced that has an energy value of not more than 330 kcal/100 g.

## Patentansprüche

1. Verfahren zur Herstellung einer Schokoladenmasse zur Herstellung von Schokolade mit einem reduzierten Energiewert, umfassend die Herstellung einer Wasser-in-Öl-Emulsion, die Herstellung einer Schokoladenzusammensetzung und das Mischen einer geschmolzenen Schokoladenzusammensetzung mit der Emulsion, wobei, um die Schokoladenzusammensetzung herzustellen,
- eine wässrige Erythritol-Lösung hergestellt wird,
- besagte Lösung mit einer Kakaoflüssigkeit vermischt wird,
- eine hergestellte Mischung verdickt und kristallisiert wird, um eine Krume herzustellen, die in Gew.-% umfasst:
das Erythritol - 74-84,
die Kakaoflüssigkeit - 15-25,
das Wasser - nicht mehr als 1,5;
- die erzeugte Krume mit Ballaststofffasern, Kakaoprodukten in Form der Kakaoflüssigkeit oder einer Kakaobutter und optional einem Milchpulver, im folgenden Zutatenverhältnis, in Gew.-%, vermischt wird:
die Krume - 30-60,
die Ballaststofffasern - 5-30,
die Kakaoflüssigkeit 30-40 und/oder die Kakaobutter - 12-15,
das Milchpulver - 0-25,
eine geschmolzene Schokoladenzusammensetzung, die mit besagter Emulsion in dem folgenden Inhaltsstoffverhältnis, in Gew.-%, gemischt wird:
die Schokoladenzusammensetzung - 80-95,
die Emulsion - 5-20.

2. Verfahren nach Anspruch 1, wobei, um die Wasser-in-Öl-Emulsion herzustellen:
- eine wässrige Phase hergestellt wird, indem Wasser und eine wasserlösliche Substanz im folgenden Zutatenverhältnis, in Gew.-%, gemischt werden:
das Wasser - 50-90,
die wasserlösliche Substanz - 10-50;
- ein Emulgator in der Kakaobutter gelöst wird und die vorbereitete wässrige Phase in die hergestellte Mischung in folgendem Zutatenverhältnis, in Gew.-%, eingebracht wird
die Kakaobutter - 20-80,
die wässrige Phase - 18-78,
der Emulgator - 1-3;
- besagtes Gemisch einem Rühren mit hoher Scherkraft unterworfen wird, um die Emulsion mit einer Tropfengröße der wässrigen Phase im Bereich von 0,1 bis 1000 Mikrometern herzustellen.

3. Verfahren nach Anspruch 2, wobei mindestens ein Bestandteil, ausgewählt aus der Gruppe bestehend aus Polyolen, Kohlenhydraten und löslichen Ballaststofffasern, als wasserlösliche Substanz verwendet wird.

4. Verfahren nach Anspruch 3, wobei Glycerin oder Sorbit als Polyole, Saccharose oder Dextrose als Kohlenhydrate und Pektin oder Cellulose als lösliche Ballaststofffasern verwendet werden.

5. Verfahren nach Anspruch 2, wobei mindestens ein Bestandteil, ausgewählt aus der Gruppe umfassend Lecithin, Polyglycerinester, Mono- oder Diglycerid, Saccharoseester, Sorbitanester, als Emulgator verwendet wird.

6. Verfahren nach Anspruch 1, wobei bei dem Schritt der Herstellung der Schokoladenzusammensetzung die wässrige Erythritol-Lösung 20-30 Gew.-% Wasser umfasst.

7. Verfahren nach Anspruch 1, wobei bei dem Schritt der Herstellung der Schokoladenzusammensetzung die wässrige Erythritol-Lösung auf eine Temperatur im Bereich von 100 bis 120°C erhitzt wird, bevor sie mit der Kakaoflüssigkeit vermischt wird.

8. Verfahren nach Anspruch 1, wobei die Mischung in einem Wärmetauscher im Schritt der Herstellung der Schokoladenzusammensetzung verdickt wird.

9. Verfahren nach Anspruch 1, wobei die Schokoladenzusammensetzung auf eine Partikelgröße im Bereich von 15 bis 25 Mikrometer verfeinert wird, bevor sie mit der Emulsion vermischt wird.

10. Verfahren nach Anspruch 1, wobei die Schokoladenzusammensetzung und die Emulsion bei einer Temperatur der Schokoladenzusammensetzung im Bereich von 40 bis 50°C gemischt werden.

11. Verfahren nach Anspruch 1, wobei mindestens ein Bestandteil, ausgewählt aus der Gruppe bestehend aus Oligofructose, Polydextrose, Pektin, Maltodextrin, Inulin, Agar, Alginat, Carageenan, Cellulose, Guarkernmehl, Xanthangummi und Johannisbrotkernmehl, als Ballaststofffasern für die Schokoladenzusammensetzung verwendet wird.

12. Verfahren nach einem der Ansprüche 1-11, wobei eine Schokoladenmasse hergestellt wird, die einen Festanteil von Kakaoprodukten in einer Menge von 40-44 Gew.-%, einen Festanteil von Gesamtfett in einer Menge von 22-27 Gew.-% und Feuchtigkeit in einer Menge von 1-11 Gew.-% umfasst.

13. Verfahren nach einem der Ansprüche 1-11, wobei eine Schokoladenmasse hergestellt wird, die einen Festanteil an Gesamtfett in einer Menge von 21-25 Gew.-%, einen Festanteil an Butterfett in einer Menge von 2-2,5 Gew.-% und Feuchtigkeit in einer Menge von 0,5-11 Gew.-% umfasst.

14. Verfahren nach einem der Ansprüche 1-11, wobei eine Schokoladenmasse hergestellt wird, die einen Energiewert von nicht mehr als 330 kcal/100 g aufweist.

## Revendications

1. Procédé pour la production d'une pâte de chocolat pour la production de chocolat présentant une valeur énergétique réduite, comprenant la préparation d'une émulsion eau-dans-huile, la préparation d'une composition de chocolat et le mélange d'une composition de chocolat fondu avec ladite émulsion, dans lequel, afin de préparer ladite composition de chocolat,
- une solution aqueuse d'érythritol est préparée,
- ladite solution est mélangée avec une pâte de cacao,
- un mélange produit est épaissi et cristallisé pour la production d'une miette comprenant, en % en poids :
de l'érythritol - 74 à 84,
la pâte de cacao - 15 à 25,
de l'eau - pas plus de 1,5 ;
- la miette produite est mélangée avec des fibres alimentaires, des produits de cacao sous forme de la pâte de cacao ou d'un beurre de cacao et, éventuellement, une poudre de lait selon le rapport d'ingrédients suivant, en % en poids :
la miette - 30 à 60,
les fibres alimentaires - 5 à 30,
la pâte de cacao 30 à 40 et/ou le beurre de cacao - 12 à 15,
la poudre de lait - 0 à 25,
une composition de chocolat fondu étant mélangée avec ladite émulsion selon le rapport d'ingrédients suivant, en % en poids :
la composition de chocolat - 80 à 95,
l'émulsion - 5 à 20.

2. Procédé selon la revendication 1, dans lequel, afin de produire l'émulsion eau-dans-huile :
- une phase aqueuse est préparée par le mélange d'eau et d'une substance soluble dans l'eau selon le rapport d'ingrédients suivant, en % en poids :
eau - 50 à 90,
la substance soluble dans l'eau - 10 à 50 ;
- un émulsifiant est dissous dans le beurre de cacao, et la phase aqueuse préparée est introduite dans le mélange produit selon le rapport d'ingrédients suivant, en % en poids :
le beurre de cacao - 20 à 80,
la phase aqueuse - 18 à 78,
l'émulsifiant - 1 à 3 ;
- ledit mélange étant soumis à une agitation à cisaillement élevé pour la production de l'émulsion comportant une grosseur de goutte de phase aqueuse dans la plage de 0,1 à 1000 microns.

3. Procédé selon la revendication 2, au moins un ingrédient choisi dans le groupe comprenant les polyols, les glucides et les fibres alimentaires solubles étant utilisé en tant que substance soluble dans l'eau.

4. Procédé selon la revendication 3, le glycérol ou le sorbitol étant utilisé en tant que polyols, le saccharose ou le dextrose étant utilisé en tant que glucides, et la pectine ou la cellulose étant utilisée en tant que fibres alimentaires solubles.

5. Procédé selon la revendication 2, au moins un ingrédient choisi dans le groupe comprenant la lécithine, un ester de polyglycérol, un mono- ou diglycéride, un ester de saccharose, un ester de sorbitane étant utilisé en tant qu'émulsifiant.

6. Procédé selon la revendication 1, dans lequel dans l'étape de préparation de la composition de chocolat, la solution aqueuse d'érythritol comprend 20 à 30% en poids d'eau.

7. Procédé selon la revendication 1, dans lequel dans l'étape de préparation de la composition de chocolat, la solution aqueuse d'érythritol est chauffée à une température dans la plage de 100 à 120°C avant son mélange avec la pâte de cacao.

8. Procédé selon la revendication 1, le mélange étant épaissi dans un échangeur de chaleur dans l'étape de préparation de la composition de chocolat.

9. Procédé selon la revendication 1, la composition de chocolat étant affinée jusqu'à une grosseur de particule se situant dans la plage de 15 à 25 microns avant de la mélanger avec l'émulsion.

10. Procédé selon la revendication 1, la composition de chocolat et l'émulsion étant mélangées à une température de la composition de chocolat se situant dans la plage de 40 à 50°C.

11. Procédé selon la revendication 1, au moins un ingrédient choisi dans le groupe comprenant l'oligofructose, le polydextrose, la pectine, la maltodextrine, l'inuline, l'agar, l'alginate, le carraghénane, la cellulose, la gomme de guar, la gomme de xanthane et la gomme de caroube étant utilisé en tant que fibres alimentaires pour la composition de chocolat.

12. Procédé selon l'une quelconque des revendications 1 à 11, la pâte de chocolat étant produite, laquelle comprend un résidu solide de produits de cacao en une quantité de 40 à 44% en poids ; un résidu solide de graisse totale en une quantité de 22 à 27% en poids, et de l'humidité en une quantité de 1 à 11% en poids.

13. Procédé selon l'une quelconque des revendications 1 à 11, la pâte de chocolat étant produite, laquelle comprend un résidu solide de graisse totale en une quantité de 21 à 25% en poids, un résidu solide de graisse de beurre en une quantité de 2 à 2,5% en poids, et de l'humidité en une quantité de 0,5 à 11% en poids.

14. Procédé selon l'une quelconque des revendications 1 à 11, la pâte de chocolat étant produite, laquelle possède une valeur énergétique de pas plus de 330 kcal/100 g.
